(19) **Europäisches Patentamt**

**European Patent Office**

**Office européen des brevets**

(11) Veröffentlichungsnummer: **0 281 886 B1**

(12) **EUROPÄISCHE PATENTSCHRIFT**

(45) Veröffentlichungstag der Patentschrift: **29.04.92**

(21) Anmeldenummer: **88102997.9**

(22) Anmeldetag: **29.02.88**

(51) Int. Cl.⁵: **A01C 17/00**

(54) **Schleuderdüngerstreuer.**

(30) Priorität: **06.03.87 DE 3707188**

(43) Veröffentlichungstag der Anmeldung:
**14.09.88 Patentblatt 88/37**

(45) Bekanntmachung des Hinweises auf die
Patenterteilung:
**29.04.92 Patentblatt 92/18**

(84) Benannte Vertragsstaaten:
**AT BE DE ES FR GB NL SE**

(56) Entgegenhaltungen:
**DE-U- 8 705 447**
**FR-A- 2 450 551**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Dreyer, Heinz, Dipl.-Ing. Univ. Dr.
agr.
Am Amazonenwerk 7
W-4507 Hasbergen(DE)**

**Beschreibung**

Die Erfindung betrifft einen Schleuderdüngerstreuer zum Verteilen von Düngemitteln und dgl. gemäß des Oberbegriffes des Anspruches 1.

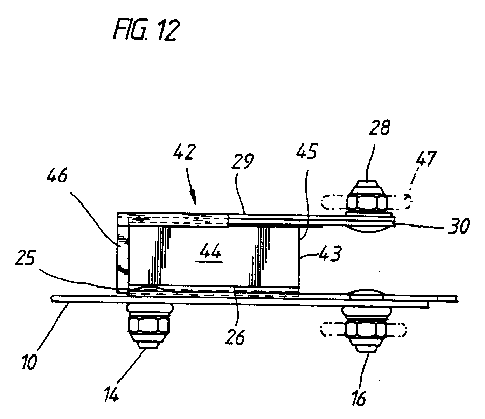

Durch die DE-OS 29 08 949 ist ein gattungsge-mäßer Schleuderdüngerstreuer bekannt. Entspre-chend dem Ausführungsbeispiel nach den Fig. 12 bis 13 sind die Wurfschaufeln winkelverschwenkbar auf den Schleuderscheiben angeordnet. Mittels der auf der Schleuderscheibe angebrachten Skala kann der Winkelwert der Wurfschaufeln exakt eingestellt werden. Mittels dieser Maßnahme ist es möglich, das Normalstreuen und das Spätdüngen durch Veränderung des Abwurfwinkels durchzuführen. Eine teleskopartig veränderbare Einstellung der Wurfschaufel ist hier nicht vorgesehen.

Ein weiterer Schleuderdüngerstreuer ist durch die EP-PS 00 17 128 bekannt. Dieser Schleuderdüngerstreuer weist zwei unterhalb seines Vorratsbehälters quer zur Fahrtrichtung angeordnete Schleuderscheiben auf, die jeweils leicht lösbar auf den Ausgangswellen eines Winkelgetriebes angeordnet sind. Auf den Schleuderscheiben sind jeweils zwei Wurfschaufeln unterschiedlicher Länge befestigt, deren jeweilige Abstreukante einen unterschiedlichen Abstand zur Rotationsachse der Schleuderscheibe aufweisen sollen. Jede Wurfschaufel besteht aus einem inneren Teil gleicher Länge, an dem unterschiedlich lange, in lotrechter Ebene schwenkbare äußere Teile angeordnet sind, so daß der in lotrechter Ebene gemessene Abwurfwinkel für die jeweiligen äußeren Teile in unterschiedlichen Größen eingestellt werden kann. Zur Veränderung des Abstandes der Abstreukante der jeweiligen Wurfschaufel von der Rotationsachse der Schleuderscheibe weist diese zur Befestigung des jeweiligen inneren Teiles einer Wurfschaufel ein radial angeordnetes Langloch auf. Der horizontale Anstellwinkel zwischen der Wurfschaufel und der an der Stelle ihrer Abstreukante an ihrer Umlaufbahn in Drehrichtung angelegten Tangente läßt sich mittels sich in jedem inneren Teil einer Wurfschaufel befindlichen, bogenförmig ausgebildeten Langloches verändern.

Dadurch, daß sich der Abstand der Abstreukante der Wurfschaufeln von der Rotationsachse der Schleuderscheibe und der horizontale Anschlagwinkel der Schaufeln verändern läßt, ist eine für jeden Einsatzfall gleichmäßige Verteilung der Düngemittel und anderer Stoffe auf den Boden zu erreichen sowie ein optimales Streubild zu erzeugen.

Nachteilig ist jedoch, daß sich eine Veränderung des Abstandes der Abstreukante der Wurfschaufeln von der Rotationsachse der Schleuderscheibe nur dadurch herbeiführen läßt, indem das innere Teil der Wurfschaufel mit verschoben werden muß. Dieses führt bei einer Vergrößerung des Abstandes der Abstreukannte dazu, daß das innere Teil radial nach außen, in Richtung auf den Schleu-derscheibenrand, verschoben wird. Hierdurch be-steht die Gefahr, daß der aus der Auslauföffnung des Vorratsbehälters herausrieselnde und auf die Schleuderscheibe auftreffende Materialstrom nicht immer sicher von den einzelnen Wurfschaufeln erfaßt und nicht in ordnungsgemäßer Weise verteilt wird. Diese Gefahr besteht vor allem dann, wen der radiale Abstand der Abstreukante, um eine große Vatiationsbreite bei der Einstellung der Abreitsbreite - von beispielsweise 12 bis 24 m und mehr - zu haben, sehrvergrößert werden muß. Als weiterer Nachteil ist das Einstellen in der Wurfschaufel in der jeweils erforderlichen Position anzusehen, da weder an den Wurfschaufeln noch an den Schleuderscheiben Einstellmarkierungen vorhanden sind.

Außerdem ist durch den Prospekt "AMAZONE-ZAU Die konsequente Weiterentwicklung der AMAZONE-Zentrifugalstreuer-Technik!" mit dem Druckvermerk "D 508* 4.84" ein Schleuderdünger-streuer mit werkzeuglos auswechselbaren Streu-scheiben bekannt. Für diesen Düngerstreuer wer-den verschiedene Streuscheibentypen, mit unter-schiedlich langen und unterschiedlichen Abwurfwin-keln aufweisende Wurfschaufeln, beschrieben , die entsprechend den jeweiligen Einsatzverhältnissen gegeneinander austauschbar sind. Mittels dieses Streuscheibenwechselsystems läßt sich auf ein-fachste Weise ein Streuscheibenwechsel vorneh-men, wobei je nach Einsatzfall Normal-, Breit-, verschiedene Sonder- und/oder verschiedene Grenzstreuscheiben montiert werden können. Mit diesen verschiedenen Streuscheiben und ihren unterschiedlich langen und unterschiedlich angestellten Wurfschaufeln lassen sich nun alle handelsüblichen Mineraldünger bis zu einer Arbeitsbreite von bis zu 24m exakt verteilen, daß ein optimales Streubild erzeugt wird. Mittels dieses Streuscheibenwechselsystems ist es möglich, die verschiedenen Arbeitsbreiten an das jeweilige Fahrgassensystem anzupassen.

Da auf einem landwirtschaftlichen Betrieb die unterschiedlichsten Düngersorten ausgebracht werden müssen, ist es notwendig, mehrere verschiedene Streuscheibentypen einzusetzen, um so je nach Düngersorte die unterschiedlichen Arbeitsbreiten zu erreichen und die Düngemittel gleichmäßig zu verteilen. Die Benutzer dieser Schleuderdüngerstreuer müssen also mehrere unterschiedliche Streuscheibentypen lagern. Aus dem selben Grunde ist die Lagerhaltung der unterschiedlichen Streuscheibentypen auch bei dem Düngerstreuerhersteller sehr groß, und daher aufwendig und zu dem kostspielig und teuer.

Der Erfindung liegt daher die Aufgabe zugrunde, den bekannten Schleuderdüngerstreuer für den praktischen Gebrauch wesentlich zu verbessern und gleichzeitig für den Landwirt einfacher einstellbar zu gestalten.

Diese Aufgabe wird in erfindungsgemäßer Weise durch die kennzeichnenden Maßnahmen des Anspruches 1 gelöst.

Infolge dieser Maßnahmen ist es möglich, die auf den Schleuderscheiben angeordneten Wurfschaufeln derart einzustellen, daß ein und dieselbe Streuscheibe - je nach Stellung und Länge der Wurfschaufeln - als Normal-, Breit-, Sonder- und Grenzstreuscheibe nutzbar ist. Mittels der dem verschwenkbaren inneren Teil und dem verschiebbaren äußeren Teil jeweils zugeordneten Markierungen lassen sich die einzelnen Positionen der Wurfschaufeln auf den Streuscheiben anhand einer Tabelle genaustens einstellen, so daß unterschiedliche Arbeitsbreiten unter Berücksichtigung der verschiedenen Düngersorten einstellbar sind. Hierbei können die zur Verstellung der Wurfschaufeln notwendigen Verstell- und Festsetzelemente als werkzeuglos lösbare Schnellverschlüsse, wie beispielsweise Flügelschrauben und -muttern, Chipverschlüsse etc. ausgebildet sein.

Durch die nicht vorveröffentlichte europäische Patentanmeldung 02 42 749 ist ein Schleuderdüngerstreuer bekannt geworden, der mit Wurfschaufeln, die aus zwei teleskopartig zueinander verschiebbaren Teilen besteht, ausgestattet ist. Somit können die Wurfschaufeln unterschiedlich lang eingestellt werden. Wie diese Einstellung vorgenommen werden soll, ist der Druckschrift nicht zu entnehmen. Die Wurfschaufeln sind fest auf den Schleuderscheiben angeordnet, und können nicht winkelverschwenkt werden.

Dieses einfache Einstellen der jeweiligen Wurfschaufelpositionen auf der Schleuderscheibe läßt sich auch durch auf dem verschwenkbaren inneren Teil und dem verschiebbaren Teil jeweils angeordnete Skalen mit Zeigern oder anderen Markierungselementen erreichen, wobei die jeweiligen Einstelldaten einer vom Hersteller erstellen Streutabelle entnommen werden.

In einer weiteren Ausführungsform zur Lösung der Aufgabe ist in erfindungsgemäßer Weise vorgesehen, daß jeweils das gleiche innere Teil der in gleicher Drehrichtung drehenden Wurfschaufeln für verschiedene Streubreite vorgesehen ist, und daß an diese inneren Teile verschiedenartig ausgebildet und/oder verschieden lange Teile anbringbar sind. Hierdurch wird eine weitere Möglichkeit geschaffen, das Auswechseln der gesamten Streuscheiben, gemäß dem Stand der Technik, zu umgehen, so daß es nicht erforderlich ist, mehrere mit verschiedenartigen Wurfschaufeln besetzte Streuscheiben einzusetzen, wodurch die Lagerhaltung der Streuscheiben ebenfalls wesentlich vereinfacht wird. Der universelle Einsatz der Streuscheiben für die handelsüblichen Düngersorten, Arbeitsbreiten und Einsatzverhältnisse läßt sich auf einfache Weise durch das Anbringen der verschiedenartig und/oder verschieden lange äußeren Teile an die inneren Teile herbeiführen.

Sollen die unterschiedlichsten Düngersorten über einen sehr großen Arbeitsbreitenbereich von beispielsweise 6 bis 24m ausgebracht werden, kann es aus Gründen der Qualität des Streubildes sinnvoll sein, daß die Schleuderscheiben gegen anders ausgebildete Schleuderscheiben austauschbar auf ihren Antriebswellen angeordnet sind. Es wird aber praktisch nur noch zwischen zwei Schleuderscheibentypen unterschieden. Die Erfindung berücksichtigt hierbei, daß die "normalen" Schleuderscheiben über z.B. Arbeitsbreiten von 12 bis 24m mit relativ langen Wurfschaufeln gegen Schleuderscheiben mit relativ kurz ausgebildeten Wurfschaufeln zum "Grenzstreuen" austauschbar sind. Beim "Grenzstreuen" muß zu der dem Feldrand zugewandten Seite des Streuers der Dünger bis an den Feldrand und praktisch nicht über den Feldrand hinaus in der erforderlichen Streustärke geworfen werden, weil auf der dem Feldrand zugewandten Seite bei Überlappung des Streubildes erfolgt.

Hierbei ist weiterhin erfindungsgemäß vorgesehen, daß auch die Schleuderscheiben zum "Grenzstreuen" Wurfschaufeln aufweisen, die teleskopartig längenveränderbar sowie in horizontaler Ebene winkelverschwenkbar auf den Schleuderscheiben angeordnet sind. Hierdurch kann der Düngerstreuer in einfachster Weise auf verschiedene Arbeitsbreiten, die beispielsweise einem Mehrfachen der Drillmaschinenarbeitsbreite entsprechen, zum Streuen zum Feldrand hin eingestellt werden. Weist die Drillmaschine beispielsweise eine Arbeitsbreite von 3m auf und die Arbeitsbreite des Düngerstreuers beträgt beispielsweise 12m, liegt die erste Fahrgasse im halben Abstand der Streubreite des Düngerstreuers, also 6m zum Feldrand. Mit Hilfe dieser Schleuderscheiben zum "Grenzstreuen" läßt sich mit nur einem "Grenzstreuscheibentyp" eine Anpassung an alle Fahrgassensysteme vornehmen, wobei das Streubild vom Feldrand steil abfällt. Bei den gebräuchlichen Arbeitsbreiten von 12 bis 24 m eines Zentrifugaldüngerstreuers ersetzt die in erfindungsgemäßer Weise ausgebildete Schleuderscheibe zum "Grenzstreuen" fünf und mehr Grenzstreuscheibentypen.

Die beiden, auf einer Schleuderscheibe angeordneten Wurfschaufeln sind derart in erfindungsgemäßer Weise ausgebildet, daß jede Wurfschaufel aus zumindest zwei zueinander in Längsrichtung der Wurfschaufeln verschiebbaren Teilen besteht, wobei der innere Teil mit dem anderen Teil in horizontaler Ebene winkelverschwenkbar ist. Hierdurch lassen sich die verschiedenen Arbeitsbreiten der Schleuderscheiben unter Berücksichtigung der Streuguteigenschaften der jeweilig auszustreuenden Düngersorte exakt einstellen. Zum Verteilen der Düngemittelpartikel über den gesamten Streubereich eines Schleuderdüngerstreuers kann es sinnvoll sein, daß die Wurfschaufeln aus zwei oder mehr zueinander in Längsrichtung verschiebbaren Teilen bestehen, wodurch eine optimale Anpassung an die Streuguteigenschaften der jeweils auszustreuenden Düngersorte erreicht wird.

Es ist in erfindungsgemäßer Weise vorgesehen, daß die Schwenkachse der Wurfschaufeln sich in der der Rotationsachse der Schleuderscheibe zugewandten Hälfte des inneren Teiles der Wurfschaufel befindet, daß der Festsetzmechanismus der winkelverschwenkbaren Schaufel sich in der der dem äußeren Rand der Schleuderscheibe zugewandten Hälfte des inneren Teiles der Wurfschaufel befindet. Infolge dieser Maßnahme bildet das innere Teil der Wurfschaufel das winkelverschwenkbare Trägerelement, welches vorzugsweise auf den eingangs dargelegten Gründen nicht in radialer Richtung verschiebbar ist, so daß der aus der Auslauföffnung des Vorratsbehälters herausrieselnde und auf die Schleuderscheibe auftreffende Düngermittelstrom immer von den Wurfschaufeln erfaßt wird.

Um das exakte Einstellen der auf der Schleuderscheibe winkelverschwenkbar angeordneten Wurfschaufeln genau nach den Angaben einer Streutabelle vornehmen zu können, befinden sich die Markierungen bzw. die Skala für das Winkelverschwenken der Wurfschaufeln auf der Schleuderscheibe in dem Bereich deren äußeren Randes, wobei die auf der Schleuderscheibe aufliegende Kante der jeweiligen Wurfschaufel als Zeiger mit den Markierungen bzw. der Skala zusammenwirken kann.

Zum genauen, einfchen Einstellen der Arbeitsbreite über die in unterschiedlichen Längen einstellbaren Wurfschaufeln ist erfindungsgemäß vorgesehen, daß auf der Oberseite eines der beiden zueinander verschiebbaren Teile der Wurfschaufel eine Skala angebracht ist, und daß an dem anderen der beiden Teile der Wurfschaufel sich ein mit der Skala zusammenwirkender Zeiger befindet.

Damit die längenveränderbaren Wurfelemente innerlich stabil sind und die Düngemittelpartikel nicht durch vorstehende Bauteile von ihrer Wurfbahn abgelenkt werden, ist erfindungsgemäß vorgesehen, daß die Teile in ihrem Querschnitt U-förmig und/oder rinnenförmig ausgebildet sind, daß der sich an den inneren Teil anschließende Teil der Wurfschaufel eine der Außenkontur der rinnenförmigen Innenschaufel entsprechende Innenkontur aufweist und in Drehrichtung der Schleuderscheiben gesehen hinter der Innenschaufel angeordnet ist. Hierbei weist dann der untere Schenkel der Innenschaufel über einen Teile seiner Tiefe zur Schaffung eines freien Raumes, in den der untere Schenkel des verschiebbaren Teiles faßt, einen Abstand zur Schleuderscheibe auf, und das der freie Raum etwa der Größe des Querschnittes des unteren Schenkels des verschiebbaren Teiles der Wurfschaufel entspricht, wobei der untere Schenkel der Innenschaufel zur Schaffung des Freiraumes durchgekröpft ausgebildet ist.

Zur Vermeidung des Auftreffens der Düngemittelpartikel auf vorstehende, in die Wurfschaufel hineinragende Bauteile mit anschließendem Ablenken von Düngemittelpartikeln und um eine gute Zugänglichkeit zur Verstellung der Wurfschaufeln zu gewährleisten, ist der Festsetzmechanismus zum Festsetzen der zueinander in Längsrichtung der Wurfschaufel verschiebbaren Teile zwischen den oberen Schenkeln der zueinander verschiebbaren Teile angeordnet. Dieser Feststellmechanismus kann aus einer oder mehreren Schrauben bestehen.

Es ist in erfindungsgemäßer Weise vorgesehen, daß sich an den zueinander verschiebbaren Teilen der Wurfschaufel zumindest ein weiteres Teil anschließt, welches in aufrechter Ebene gegenüber den anderen Teile verschwenkbar und in zumindest zwei verschiedene Positionen bringbar ist. Infolge dieser Maßnahme lassen sich die mit diesen Wurfschaufeln versehenen Streuscheiben in besonders vorteilhafter Weise sowohl für die "normale" Düngung als auch für die Spätdüngung in einen hohen Getreidebestand verwenden. Zur Spätdüngung werden die in aufrechter Ebene verschwenkbaren Teile hochgeklappt, so daß der Dünger die entsprechende Flugbahn erhält.

Zur unverwechselbaren, anhand einer Streutabelle durchgeführten Einstellung der längenveränderbaren und winkelverschwenkbaren Wurfschaufeln auf den Schleuderscheiben, sind die den jeweiligen Einstellmechanismen zugeordneten Skalen unterscheidbar gekennzeichnet oder bezeichnet, wobei die jeweilige Skala in einer Vertiefung angordnet ist. Diese Vertiefung ist in den oberen Schenkel der Wurfschaufel eingeprägt. Die Schleuderscheibe weist ebenfalls eine eingeprägte Vertiefung zur Anordnung der Skala auf. In diese Vertiefungen kann die jeweilige Skala eingeklebt oder anderweitig befestigt sein.

Zur Erhöhung der Verschleißfestigung der Wurfschaufeln ist erfindungsgemäß vorgesehen, daß das äußere Teil der Wurfschaufeln auf einem wesentlich verschleißfesterem Material als der innere Teil der Wurfschaufeln hergestellt ist. Hierdurch können die Wurfschaufeln sehr kostengünstig hergestellt werden, weil nur die mit den höheren Verschleiß belasteten Außenteile aus dem teueren verschleißfestem Material hergestellt werden.

Um das Einstellen der Wurfschaufeln sowie das Lösen der beispielsweise als Schrauben ausgebildeten Befestigungselemente zu erleichtern, ist erfindungsgemäß vorgesehen, daß alle an der Wurfschaufel bzw. zwischen den Wurfschaufeln und der Schleuderscheibe angeordneten Befestigungselemente vorzugsweise von oben gut zugänglich sind. Hierdurch sollten die Schrauben vorzugsweise fest mit der Scheibe und/oder dem jeweiligen Teil der Wurfschaufel - vorzugsweise formschlüssig oder materialfest - verbunden sein, während die Schraubenmuttern als selbstsichernde Muttern ausgebildet sein können.

Weitere Einzelheiten der Erfindung sind der Beispielsbeschreibung und den Zeichnungen zu entnehmen. Hierbei zeigen

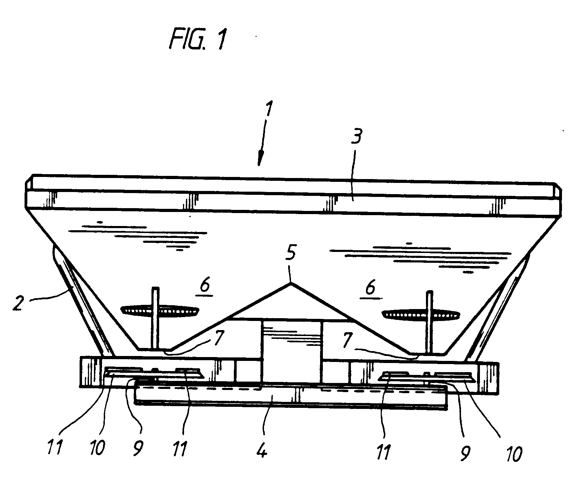

Fig. 1    den in erfindungsgemäßer Weise ausgebildeten Schleuderdüngerstreuer in der Ansicht von hinten,

Fig. 2    die linke Schleuderscheibe mit den erfindungsgemäßen Wurfschaufeln für das "Normalstreuen" in der Draufsicht und vergrößertem Maßstab,

Fig. 3    die erfindungsgemäße rechte Schleuderscheibe,

Fig. 4    Teilansicht der linken Schleuderscheibe mit einer erfindungsgemäßen Wurfschaufel für das "Normalstreuen" in der Draufsicht und vergrößertem Maßstab,

Fig. 5    die Wurfschaufel gemäß Fig. 4 in der Ansicht V - V,

Fig. 6    eine andere linke Schleuderscheibe mit erfindungsgemäßen Wurfschaufeln für das "Normalstreuen",

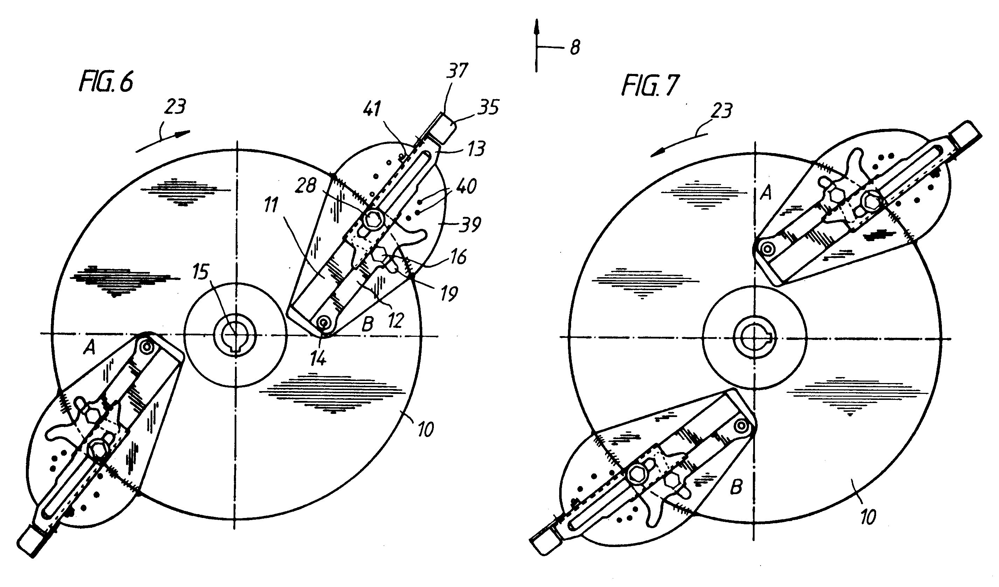

Fig. 7    die erfindungsgemäße rechte Schleuderscheibe,

Fig. 8    die linke Schleuderscheibe mit den erfindungsgemäßen Wurfschaufeln für das "Grenzstreuen",

Fig. 9    die erfindungsgemäße rechte Schleuderscheibe,

Fig. 10    Teilansicht der linken Schleuderscheibe mit einer erfindungsgemäßen Wurfschaufel für das "Grenzstreuen" in der Draufsicht und vergrößertem Maßstab,

Fig. 11    die Wurfschaufel gemäß Fig. 10 in der Ansicht XI - XI und

Fig. 12    die Wurfschaufel gemäß Fig. 10 in der Ansicht XII - XII.

Der Schleuderdüngerstreuer 1 ist mit dem Rahmen 2 ausgestattet, an dem der Vorratsbehälter 3 und ein Winkelgetriebe 4 angebracht sind.

Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die Schleuderscheiben 10 nebeneinander angeordnet. Auf diesen Schleuderscheiben 10 sind jeweils zwei Wurfschaufeln 11 befestigt. Die Befestigung der Schleuderscheiben 10 auf den Ausgangswellen 9 des Winkel- getriebes 4 ist derart ausgebildet, daß sich die Schleuderscheiben 10 vorzugsweise werkzeuglos von diesen Ausgangswellen 9 montieren bzw. demontieren lassen.

Den einzelnen Schleuderscheiben 10 wird das sich im Vorratsbehälter 3 des Schleuderdüngerstreuers 1 befindliche Düngemittel in genau einstellbaren Mengen zugeführt. Die rotierenden Schleuderscheiben 10 verteilen den auf die jeweilige Schleuderscheibe 10 auftreffenden Düngemittelstrom gleichmäßig über die genau einstellbare Arbeitsbreite S des Schleuderdüngerstreuers 1.

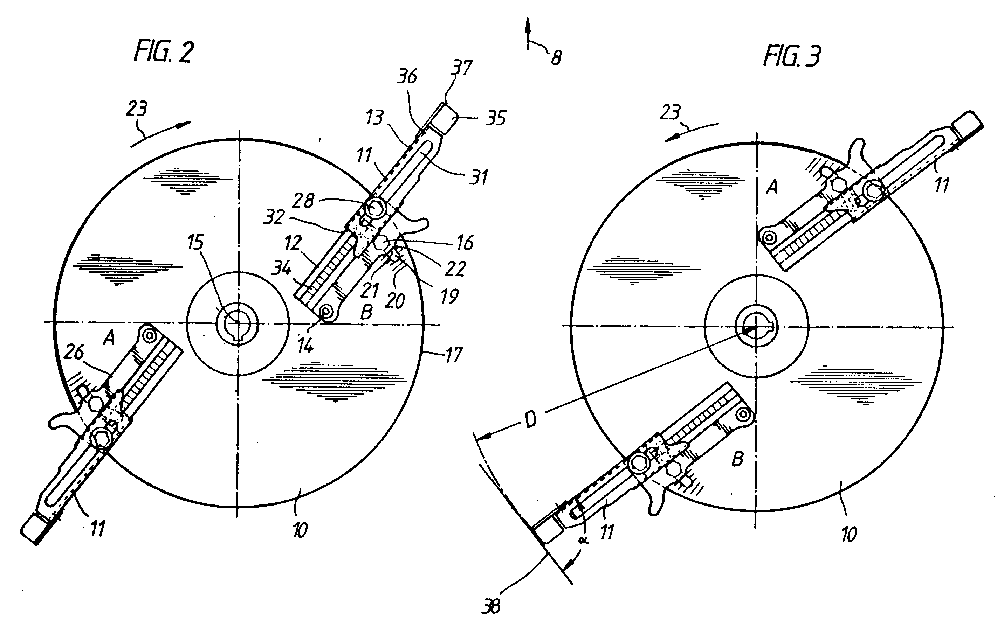

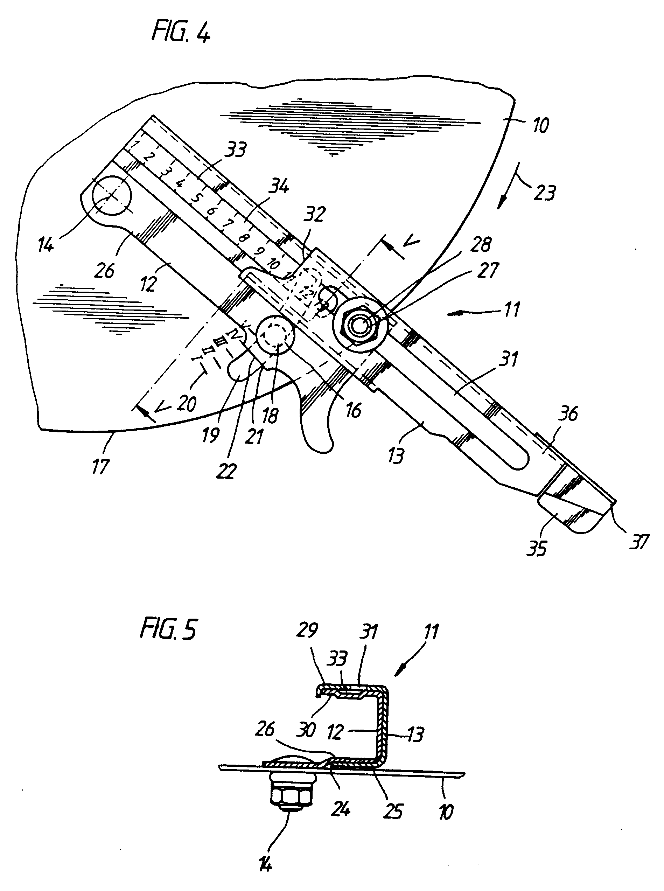

Die Fig. 2 und 3 zeigen die nebeneinander angeordneten Schleuderscheiben 10 mit den jeweils auf diesen Schleuderscheiben 10 angeordneten Wurfschaufeln 11. Bei diesen Wurfschaufeln 11 handelt es sich um relativ lange Wurfschaufeln, die für das sog. "Normalstreuen" vorgesehen sind. Die jeweiligen Wurfschaufeln 11 bestehen aus den zwei teleskopartig in Längsrichtung der Wurfschaufel 11 zueinander verschiebbaren und in verschiedenen Längen der Wurfschaufel 11 festsetzbaren Teile 12 und 13. Diese Wurfschaufeln 11 sind derart ausgebildet, daß der innere Teil 12 der Wurfschaufel 11 in radialer Richtung unverschiebbar ist. Diese längenveränderbaren Wurfschaufeln 11 sind jeweils winkelverschwenkbar auf der Schleuderscheibe 10 angeordet. Hierbei befindet sich die Schwenkachse 14 einer jeden Wurfschaufel 11 in der der Rotationsachse 15 der jeweiligen Schleuderscheibe 10 zugewandten Hälfte des inneren Teiles 12 der Wurfschaufel 11. Der Festsetzmechanismus 16 der winkelverschwenkbaren Schaufel 11 befindet sich in der dem äußeren Rand 17 der Schleuderscheibe 10 zugewandten Hälfte des inneren Teiles 12 der Wurfschaufel 11. Dieser Festsetzmechanismus 16 ist beispielsweise als lösbare Schraube 18 ausgebildet und wirkt mit dem sich in der Schleuderscheibe 10 befindlichen Langloch 19 zusammen. Im Bereich dieses Langloches 19 sind die Markierungen 20 gut sichtbar angeordnet und stellen die verschiedenen Positionen dar, in denen die winkelverschwenkbaren Wurfschaufeln 11 einstellbar sind.

Hierzu wirkt die auf der Schleuderscheibe 10 aufliegende Kante 21 des inneren Teiles 12 der jeweiligen Wurfschaufel 11 als Zeiger 22 mit den auf der Schleuderscheibe 10 angeordneten Markierungen 20 zusammen. Zum Winkelverschwenken der Wurfschaufeln 11 ist es selbstverständlich auch möglich, das Langloch 19 durch einzelnen, die jeweiligen Winkelstellungen der Wurfschaufel 10 repräsentierende einzelne Löcher auszubilden. Die beiden Teile 12 und 13 der Wurfschaufel 11 weisen eine U-förmigen Querschnitt auf, wobei sich der an dem inneren Teil 12 anschließende äußere Teil 13 der Wurfschaufel 11 eine der Außenkontur der Innenschaufel 12 entsprechende Innenkontur aufweist und in Drehrichtung 23 der Schleuderscheiben 10 gesehen hinter der Innenschaufel 12 angeordnet ist. Um einen freien Raum 24 für den unteren Schenkel 25 des verschiebbaren äußeren Teiles 13 zu schaffen, ist die Innenschaufel 12 über einen Teil ihrer Tiefe zur Schaffung dieses freien Raumes 24 durchgekröpft.

Die jeweilige Lage des inneren Teiles 12 und des äußeren Teiles 13 der Wurfschaufel 11 zueinander wird mittels des als Schraubverbindung 27 ausgebildeten Festsetzmechanismusses 28 bestimmt. Dieser Festsetzmechanismus 28 zum Festsetzen der zueinander in Längsrichtung der Wurfschaufel 11 verschiebbaren Teile 12 und 13 ist zwischen den oberen Schenkeln 29 und 30 der zueinander verschiebbaren Teile 12 und 13 angeordnet. Das äußere Teil 13 weist das Langloch 31 auf und ist somit stufenlos gegenüber dem inneren Teil 12 verstellbar. Die Kante 32 des ausziehbaren äußeren Teiles 13 wirkt mit der in der Tiefung 33 des oberen Schenkels 30 des inneren Teiles 12 angeordnent Skala 34 zusammen. An dem verschiebbaren äußeren Teil 13 der Wurfschaufel 11 ist ein weiteres als sog. Schwenkschaufel ausgebildetes Teil 35, welches um die Schwenkachse 36 in aufrechter Ebene schwenkbar ist, befestigt. Dieses Teil 35 läßt sich in zwei verschiedene Positionen arretieren, so daß sich die Flugkurve der von den Wurfschaufeln verteilten Düngemittelpartikel verändern läßt, so daß sich diese Wurfschaufeln sowohl für das "Normalstreuen" und für die sog. Spätdüngung verwenden lassen.

Damit die verschiedenen handelsüblichen Düngersorten exakt und in der gewünschten Arbeitsbreite verteilt werden können, lassen sich die auf den Schleuderscheiben angeordneten Wurfschaufeln individuell für die jeweils auszustreuende Düngersorte einstellen. Dieses Einstellen der Wurfschaufeln erfolgt nach den Angaben einer Streutabelle. Hierzu sind die auf einer Schleuderscheibe 10 befestigten Wurfschaufeln 11 beispielsweise mit den Buchstaben A und B gekennzeichnet. Soll jetzt beispielsweise der Dünger über eine Arbeitsbreite von 15 m ausgebracht werden, so sind in der Streutabelle beispielsweise die Angaben:

A II und 8
B III und 6

angegeben. Nun ist dem Landwirt bekannt, daß der die mit A gekennzeichnete Wurfschaufel 11 derart verschwenken muß, daß die Kante 21 mit der mit II gekennzeichneten Markierung 20 deckungsgleich ist. In dieser Position wird der Festsetzmechanismus 16 befestigt. Zur Erleichterung der Einstellung der verschiedenen Positionen läßt sich die Schraubverbindung 18 beispielsweise mit einer Flügelmitter versehen. Als nächstes löst der Landwirt den Festsetzmechanismus 28, der beispielsweise auch aus zwei nebeneinander angeordneten Schraubverbindung bestehen kann und verschiebt das äußere Teil 13 gegenüber dem inneren Teil 12 der Wurfschaufel 11 solange, bis die Kante 32 des äußeren Teiles 13 deckungsgleich mit der auf der Skala 34 angebrachten Ziffer 8 ist. In dieser Stellung wird das äußere Teil 13 der Wurfschaufel 11 mittels des als Schraubverbindung 27 ausgebildeten Festsetzmechanismusses 28 arretiert.

Nun wird die mit B gekennzeichnete Wurfschaufel 11 entsprechend den Angaben der Streutabelle eingestellt. Diese Einstellung erfolgt in der bereits beschriebenen Weise. Mittels dieser winkelverschwenkbar auf der jeweiligen Schleuderscheibe 10 angeordneten teleskopartig ausgebildeten Wurfschaufeln 11 läßt sich der Abstand D der Abstreukante 37 und der jeweilige horizontale Abstellwinkel $\alpha$ zwischen der Wurfschaufel 11 und der an der Stelle ihrer Abstreukante 37 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streuguteigenschaften über die genau einstellbaren Arbeitsbreiten zu verteilen.

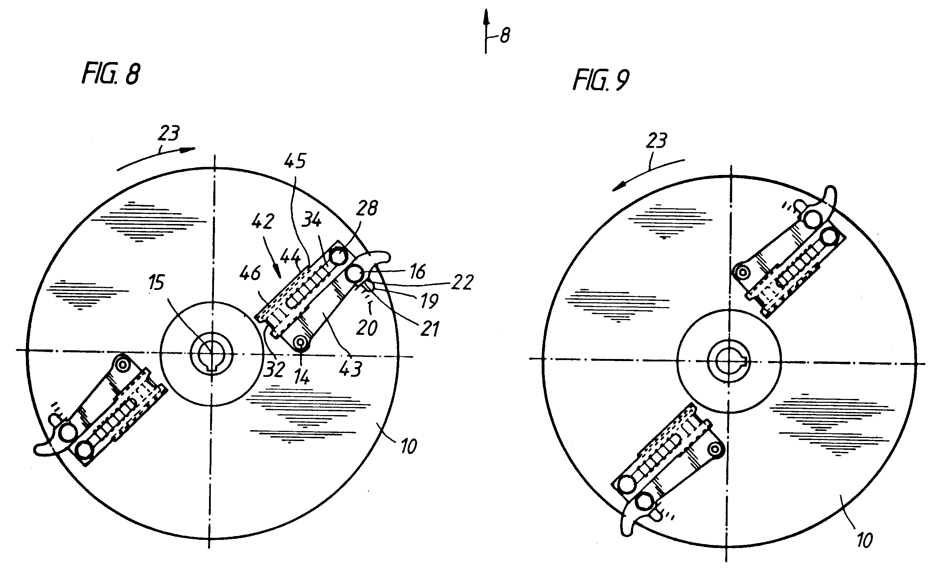

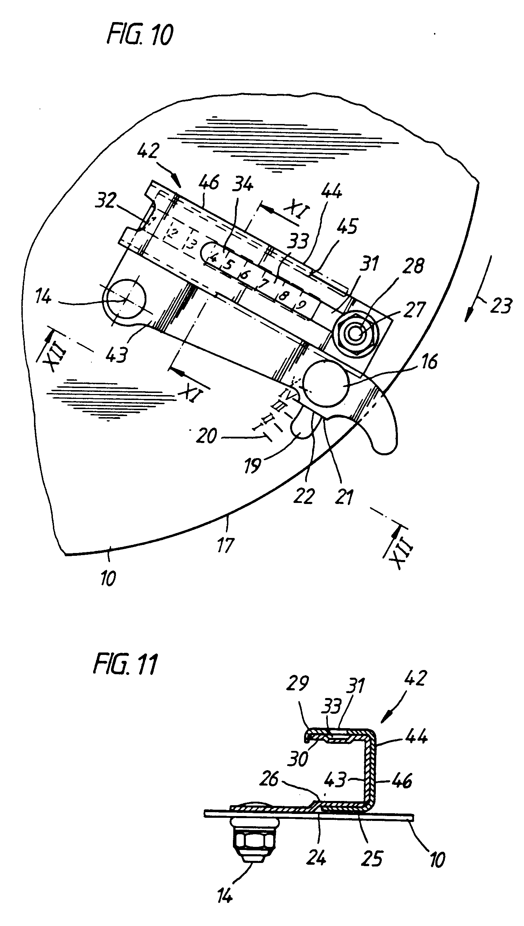

Das Einstellen des Abstandes der jeweiligen Abstreukante 37 einer Wurfschaufel 11 und das Einstellen des Anstellwinkels $\alpha$ läßt sich auch durch an den Schleuderscheiben 10 angeordneten Zusatzeinrichtungen 39, die mit unterschiedlichen, die einzelnen Einstellungen repräsentierenden Markierungslöchern 40 versehen sind. Der an dem äußeren Teil 13 angeordnete Zeiger 41 ist hierbei entsprechend den Angaben einer Streutabelle mit den unterschiedlich gekennzeichneten Löchern in Deckungsgleichheit zu bringen. Die einzelnen Löcher 40 geben die verschiedenen Positionen der jeweiligen Wurfschaufeln 11 an. Die Fig. 8 und 9 zeigen jeweils auf den Schleuderscheiben 10 angeordnete, kürzere Wurfschaufeln 11, mit denen das sog. "Grenzstreuen" durchgeführt werden kann. Diese Grenzstreuwurfschaufeln 42 unterscheiden sich nur in der Ausbildung des verschiebbaren äußeren Teiles 13, daß bei diesen sog. Grenzstreuwurfschaufeln 43 wesentlich kürzer ist als das äußere Teil 13 der in den vorhergehenden Fig. beschriebenen Wurfschaufeln. Das innere Teil 43 der Grenzstreuwurfschaufel 42 unterscheidet sich nur hinsichtlich eines verkürzten Rückenteiles 44 von dem inneren Teil der vorab beschriebenen Wurfschaufel. Dieses Verkürzen des Rückenteiles 44 wird erforderlich, um den Abstand der Abstreukante 45 von der Rotationsachse 15 der Schleuderscheibe 10 bei der Grenzstreuwurfschaufel 42 wesentlich zu verringern. Dieses ist erforderlich, um die Arbeitsbreite der mit diesen Grenzstreuwurfschaufeln 42 versehenen Schleuderscheibe wesentlich zu verringern und ein am Feldrand steil abfallendes Streubild zu erhalten. Die jeweilige Einstellung dieser Grenzstreuwurfschaufeln 42 hinsichtlich ihrer Länge und ihres Anstellwinkels α erfolgt in bereits erwähnter Weise nach den entsprechenden Angaben einer Streutabelle. Das Rückenteil 44 des inneren Teiles 43 der Grenzstreuwurfschaufel 42 kann wie mit strichpunktierten Linien gemäß Fig. 10 dargestellt, auch unterschiedlich lang ausgebildet sein. Hierdurch ergibt sich bei nicht ausgezogenem äußeren Teil 46 eine Verlagerung der Abstreukante 45.

Zur Vereinfachung der jeweiligen Stellungen der Wurfschaufeln 11 und 42 kann es sinnvoll sein, die als Schraubverbindungen 18 und 27 ausgebildeten Festsetzmechanismen 16 und 28 mit den in Fig. 12 mit strichpunktierten Linien dargestellten Flügelmuttern 47 zu versehen. Aus Gründen der Stabilität kann es sinnvoll sein, den Festsetzmechanismus 28 durch mehrere einzelne, nebeneinander angeordnete Schraubverbindungen zu ersetzten. Mittels dieser auf den jeweiligen Schleuderscheiben 10 aufgesetzten längenveränderbaren und winkelverstellbaren Wurfschaufeln 11 und 42 ist es auf einfachste Weise möglich, unterschiedliche Arbeitsbreiten einzustellen, wobei die Wurfschaufeln 11 und 42 entsprechend den jeweiligen Streuguteigenschaften der jeweils auszustreuenden Düngersorte angepaßt werden kann.

**Patentansprüche**

1. Schleuderdüngerstreuer zum Verteilen von Düngemitteln und dgl. mit einem Vorratsbehälter (1), der Dosierelemente (7) für zumindest zwei quer zur Fahrtrichtung angeordnete Schleuderscheiben (10) aufweist und jede Schleuderscheibe (10) mit zumindest einer Wurfschaufel (11,42) ausgestattet ist, wobei der Abstand der äußeren Kante der Wurfschaufel (11,42) von der Rotationsachse der Schleuderscheibe (10) sowie der horizontale Anstellwinkel zwischen der Wurfschaufel und der an der Stelle ihrer Abstreukante an ihrer Umlaufbahn in Drehrichtung angelegten Tangente veränderbar ist, wobei jede Wurfschaufel (11,42) aus zumindest zwei Teilen (12,13,43,46) besteht, wobei der innere Teil (12,43) der Wurfschaufel (11,42) in radialer Richtung unverschiebbar, jedoch zur Radialen der Schleuderscheibe winkelverschwenkbar auf der Schleuderscheibe (10) angeordnet ist, und wobei dem verschwenkbaren inneren Teil (12,43) Markierungen (20,40) zugeordnet sind, dadurch gekennzeichnet, daß die beiden Teile (12,13,43,46) der Wurfschaufel (11,42) teleskopartig in Längsrichtung der Wurfschaufel (11,42) zueinander verschiebbar und in verschiedenen Längen der Wurfschaufel (11,42) festsetzbar sind, daß der sich an den inneren Teil (12,43) anschließende Teil (13,46) der Wurfschaufel (11,42) gegenüber dem verschwenkbaren Teil (12,43) der Wurfschaufel (11,42) in Längsrichtung der Wurfschaufel (11,42) verschiebbar ist, daß auch dem verschiebbaren Teil (13,46) der Wurfschaufel (11,42) Markierungen (34) zugeordnet sind.

2. Schleuderstreuer nach Anspruch 1, dadurch gekennzeichnet, daß dem verschwenkbaren inneren Teil (12,43) und dem verschiebbaren Teil (13,46) jeweils Skalen und Zeiger zugeordnet sind.

3. Schleuderstreuer nach Anspruch 1, wobei auf jeder Schleuderscheibe zumindest zwei Wurfschaufeln angeordnet sind, dadurch gekennzeichnet, daß jede Wurfschaufel (11,42) aus zumindest zwei zueinander in Längsrichtung der Wurfschaufel (11,42) verschiebbaren Teilen (12,13,43,46) besteht, wobei der innere Teil (12,43) mit dem anderen Teil (13,46) in horizontaler Ebene winkelverschwenkbar ist.

4. Schleuderstreuer nach Anspruch 3, dadurch gekennzeichnet, daß die Wurfschaufel (11,42) aus zwei oder mehr zueinander in Längsrichtung verschiebbaren Teilen (12,13,43,46) bestehen.

5. Schleuderstreuer nach Anspruch 1 und/oder 3, dadurch gekennzeichnet, daß die Schwenkachse (14) der Wurfschaufel (11,42) sich in der der Rotationsachse (15) der Schleuderscheibe (10) zugewandten Hälfte des inneren Teiles (12,43) der Wurfschaufel (11,42) befindet, daß der Festsetzmechanismus (16) der winkelverschwenkbaren Schaufel (12,43) sich in der der dem äußeren Rand (17) der Schleuderscheibe zugewandten Hälfte des inneren Teiles (12,43) der Wurfschaufel (11,42) befindet.

6. Schleuderstreuer nach einem oder mehreren der vorstehenden Ansprüche, dadurch gekennzeichnet, daß die Markierungen bzw. die Skala (20,40) für das Winkelverschwenken der Wurfschaufel (11,42) sich auf der Schleuderscheibe (10) in dem Bereich deren äußeren Randes (17) befindet, und daß die auf der Schleuderscheibe (10) aufliegende Kante (21) der jeweiligen Wurfschaufel (11,42) als Zeiger (22) mit den Markierungen bzw. der Skala (20,40) zusammenwirkt.

7. Schleuderstreuer nach einem oder mehreren der vorstehenden Ansprüche, dadurch gekennzeichnet, daß auf der Oberseite eines der beiden zueinanderverschiebbaren Teile (12,43) der Wurfschaufel (11,42) eine Skala (34) angebracht ist, und daß an dem anderen (13,46) der beiden Teile (12,13,43,46) der Wurfschaufel (11,42) sich ein mit der Skala (3443) zusammenwirkender Zeiger (32) befindet.

8. Schleuderstreuer nach Anspruch 1, dadurch gekennzeichnet, daß die Teile (12,13,43,46) der Wurfschaufel (11,42) in ihrem Querschnitt U-förmig und/oder rinnenförmig ausgebildet sind, daß der sich an den inneren Teil (12,43) anschließende Teil (13,46) der Wurfschaufel (11,42) eine der Außenkontur der rinnenförmigen Innenschaufel (12,43) entsprechende Innenkontur aufweist und in Drehrichtung (23) der Schleuderscheiben (10) gesehen hinter der Innenschaufel (12,43) angeordnet ist.

9. Schleuderstreuer nach Anspruch 7, dadurch gekennzeichnet, daß der untere Schenkel (26) der Innenschaufel (12,43) über einen Teil seiner Tiefe zur Schaffung eines freien Raumes (24), in den der untere Schenkel (25) des verschiebbaren Teiles (13,46) faßt einen Abstand zu der Schleuderscheibe aufweist, und daß der freie Raum (24) etwa der Größe des Querschnittes des unteren Schenkels (25) des verschiebbaren Teiles (13,46) der Wurfschaufel (11,42) entspricht.

10. Schleuderstreuer nach Anspruch 9, dadurch gekennzeichnet, daß der untere Schenkel (26) der Innenschaufel (12,43) zur Schaffung des freien Raumes (24) durchgekröpft ausgebildet ist.

11. Schleuderstreuer nach Anspruch 5, dadurch gekennzeichnet, daß der Festsetzmechanismus (28) zum Festsetzen der zueinander in Längsrichtung der Wurfschaufel (11,42) verschiebbaren Teile (12,13,43,46) zwischen den oberen Schenkeln (29,30) der zueinander verschiebbaren Teile (12,13,43,46) angeordnet ist.

12. Schleuderstreuer nach Anspruch 1, dadurch gekennzeichnet, daß sich an den zueinander verschiebbaren Teilen (12,13,43,46) der Wurfschaufel (11,42) zumindest ein weiteres Teil (35) anschließt, welches in aufrechter Ebene gegenüber den anderen Teilen (12,13,43,46) verschwenkbar und in zumindest zwei verschiedene Positionen bringbar ist.

13. Schleuderstreuer nach Anspruch 6 und 7, dadurch gekennzeichnet, daß die Skalen (20,34) unterscheidbar gekennzeichnet oder bezeichnet sind.

14. Schleuderstreuer nach Anspruch 6 oder 7, dadurch gekennzeichnet, daß die jeweilige Skala (34) in einer Vertiefung (33) angeordnet ist.

15. Schleuderstreuer nach Anspruch 17, dadurch gekennzeichnet, daß die Vertiefung (33) in den oberen Schenkel (30) der Wurfschaufel (11,42) rinnenförmig eingeprägt ist.

16. Schleuderstreuer nach Anspruch 17, dadurch gekennzeichnet, daß in die Schleuderscheibe (10) eine Vertiefung zur Anordnung der Skala (20) eingeprägt ist.

17. Schleuderstreuer nach Anspruch 17, dadurch gekennzeichnet, daß in der Vertiefung (33) die Skala (34) eingeklebt oder anderweitig befestigt ist.

18. Schleuderstreuer nach Anspruch 1, dadurch gekennzeichnet, daß das äußere Teile (13,46) der Wurfschaufel (11,42) aus einem wesentlich verschleißfesteren Material als das innere Teil (12,43) der Wurfschaufel (11,42) hergestellt ist.

**Claims**

1. Centrifugal fertilizer broadcaster for distributing fertilizers and similar materials, including a hopper (1), which includes metering members (7) for at least two centrifugal discs (10), which are disposed transversely relative to the direction of travel, and each centrifugal disc (10) is provided with at least one throwing vane (11, 42), the spacing between the outer edge of the throwing vane (11, 42) and the rotary axis of the centrifugal disc (10) being adjustable, and the horizontal throwing angle between the throwing vane and the tangent, which is where its dispersing edge executes its circular path in the direction of rotation, being adjustable, each throwing vane (11, 42) comprising at least two portions (12, 13, 43, 46), the inner portion (12, 43) of the throwing vane (11, 42) being disposed on the centrifugal disc (10) so as to be non-displaceable in a radial direction, but so as to be angularly pivotable relative to the radial of the centrifugal disc, and markings (20, 40) being associated with the pivotable, inner portion (12, 43), characterised in that the two portions (12, 13, 43, 46) of the throwing vane (11, 42) are telescopically displaceable in the longitudinal direction of the throwing vane (11, 42) relative to each other and are securable at different lengths of the throwing vane (11, 42), in that the portion (13, 46) of the throwing vane (11, 42) communicating with the inner portion (12, 43) is displaceable in the longitudinal direction of the throwing vane (11, 42) relative to the pivotable portion (12, 42) of the throwing vane (11, 42), and in that markings (34) are also associated with the displaceable portion (13, 46) of the throwing vane (11, 42).

2. Centrifugal broadcaster according to claim 1, characterised in that scales and indicators are associated with the pivotable inner portion (12, 43) and the displaceable portion (13, 46) respectively.

3. Centrifugal broadcaster according to claim 1, at least two throwing vane being disposed on each centrifugal disc, characterised in that each throwing vane (11, 42) comprises at least two portions (12, 13, 43, 46), which are displaceable in the longitudinal direction of the throwing vane (11, 42) relative to each other, the inner portion (12, 43) being angularly pivotable in a horizontal plane with the other portion (13, 46).

4. Centrifugal broadcaster according to claim 3, characterised in that the throwing vane (11, 42) comprises two or more portions (12, 13, 43, 46), which are displaceable in the longitudinal direction relative to each other.

5. Centrifugal broadcaster according to claim 1 and/or 3, characterised in that the pivotal axis (14) of the throwing vane (11, 42) is situated in the half of the inner portion (12, 43) of the throwing vane (11, 42) facing the rotary axis (15) of the centrifugal disc (10), and in that the securing mechanism (16) for securing the angularly pivotable vane (12, 43) is situated in the half of the inner portion (12, 43) of the throwing vane (11, 42) facing the outer edge (17) of the centrifugal disc.

6. Centrifugal broadcaster according to one or more of the preceding claims, characterised in that the markings or respectively the scales (20, 40) for the angular pivotal movement of the throwing vane (11, 42) are situated on the centrifugal disc (10) in the region of its outer edge (17), and in that the edge (21) of each throwing vane (11, 42) lying on the centrifugal disc (10) co-operates with the markings or the scales (20, 40) respectively in order to serve as an indicator (22).

7. Centrifugal broadcaster according to one or more of the preceding claims, characterised in that a scale (34) is mounted on the upper surface of one of the two portions (12, 43) of the throwing vane (11, 42) which are displaceable relative to each other, and in that an indicator (32), which co-operates with the scale (34, 43), is situated on the other portion (13, 46) of the two portions (12, 13, 43, 46) of the throwing vane (11, 42).

8. Centrifugal broadcaster according to claim 1, characterised in that the portions (12, 13, 43, 46) of the throwing vane (11, 42) have a U-shaped cross-section and/or are duct-like, and in that the portion (13, 46) of the throwing vane (11, 42) communicating with the inner portion (12, 43) has an inner configuration corresponding to the outer configuration of the duct-like inner vane (12, 43) and is disposed behind the inner vane (12, 43) when viewed with respect to the direction of rotation (23) of the centrifugal discs (10).

9. Centrifugal broadcaster according to claim 7, characterised in that the lower flange (26) of the inner vane (12, 43) has a spacing from the centrifugal disc over part of its depth in order to create a free space (24), in which the lower flange (25) of the displaceable portion (13, 46) engages, and in that the free space (24) corresponds approximately to the size of the cross-section of the lower flange (25) of the displaceable portion (13, 46) of the throwing vane (11, 42).

10. Centrifugal broadcaster according to claim 9, characterised in that the lower flange (26) of the inner vane (12, 43) is bent in order to create the free space (24).

11. Centrifugal broadcaster according to claim 5, characterised in that the securing mechanism (28) for securing the portions (12, 13, 43, 46), which are displaceable in the longitudinal direction of the throwing vane (11, 42) relative to each other, is disposed between the upper flanges (29, 30) of the portions (12, 13, 43, 46), which are displaceable relative to each other.

12. Centrifugal broadcaster according to claim 1, characterised in that at least one additional portion (35), which is pivotable in an upright plane relative to the other portions (12, 13, 43, 46) and can be brought into at least two different positions, communicates with the portions (12, 13, 43, 46) of the throwing vane (11, 42) which are displaceable relative to each other.

13. Centrifugal broadcaster according to claims 6 and 7, characterised in that the scales (20, 34) are designated or marked in a distinguishable manner.

14. Centrifugal broadcaster according to claim 6 or 7, characterised in that each scale (34) is disposed in a respective recess (33).

15. Centrifugal broadcaster according to claim 17, characterised in that the recess (33) is stamped into the upper flange (30) of the throwing vane (11, 42) in a duct-like manner.

16. Centrifugal broadcaster according to claim 17, characterised in that a recess is stamped into the centrifugal disc (10) for the accommodation of the scale (20).

17. Centrifugal broadcaster according to claim 17, characterised in that the scale (34) is adhered in the recess (33) or secured in some other way.

18. Centrifugal broadcaster according to claim 1, characterised in that the outer portion (13, 46) of the throwing vane (11, 42) is formed from a substantially more wear-resistant material than the inner portion (12, 43) of the throwing vane (11, 42).

**Revendications**

1. Epandeur centrifuge pour distribuer des engrais ou produits analogues, comprenant un réservoir d'alimentation (1) muni d'éléments de dosage (7) pour au moins deux disques d'épandage (10) juxtaposés transversalement à la direction de déplacement et chaque disque d'épandage (10) est muni d'au moins une palette d'éjection (11, 42), la distance du bord extérieur des palettes d'éjection (11, 42) et l'axe de rotation des disques d'épandage (10) ainsi que l'angle d'attaque horizontal entre la palette d'éjection et la tangente appliquée dans le sens de rotation à sa trajectoire, à l'endroit de son arête d'éjection étant réglable, chaque palette d'éjection (11, 42) se composant d'au moins deux parties (12, 13, 43, 46), et la partie intérieure (12, 43) des palettes d'éjection (11, 42) étant bloquée dans la direction radiale mais pouvant pivoter angulairement par rapport à la direction radiale du disque d'épandage sur le disque (10), la partie intérieure pivotante (12, 43) comportant des repères (20, 40), épandeur caractérisé en ce que les deux parties (12, 13, 43, 46) formant les palettes d'éjection (11, 42) coulissent télescopiquement l'une par rapport à l'autre dans la direction longitudinale des palettes d'éjection (11, 42), dont la partie (13, 46) /qui fait suite à la partie inférieure (12, 43) peut coulisser par rapport à la partie pivotante (12, 43) des palettes d'éjection (11, 42), dans la direction longitudinale des palettes d'éjection (11, 42) et la partie (13, 46) de la palette d'éjection (11, 42) comporte des repères (34) également associés à la partie coulissante (13, 46) des palettes d'éjection (11, 42).

2. Epandeur centrifuge selon la revendication 1, caractérisé en ce que des échelles et des index sont associés respectivement à la partie intérieure pivotante (12, 43) et à la partie coulissante (13, 46).

3. Epandeur centrifuge selon la revendication 1, chaque disque d'épandage comportant au moins deux palettes d'éjection, épandeur caractérisé en ce que chaque palette d'éjection (11, 42) se compose d'au moins deux parties (12, 13, 43, 46) coulissantes dans la direction longitudinale des palettes (11, 43), la partie intérieure (12, 43) pouvant pivoter angulairement dans un plan horizontal avec l'autre partie (13, 46).

4. Epandeur centrifuge selon la revendication 3, caractérisé en ce que les palettes d'éjection (11, 42) se composent de deux ou plusieurs parties (12, 13, 43, 46) coulissantes l'une par rapport à l'autre dans la direction longitudinale.

5. Epandeur centrifuge selon la revendication 1 et/ou 3, caractérisé en ce que l'axe de pivotement (14) des palettes (11, 42) se trouve dans la moitié de la partie intérieure (12, 43) des palettes (11, 42) du côté de l'axe de rotation (15) des disques d'épandage (10), et le mécanisme de blocage (16) des palettes (12, 43) susceptibles de pivoter angulairement se trouve dans la moitié de la partie intérieure (12, 43) des palettes d'éjection (11, 42) se trouvant du côté du bord extérieur (17) du disque d'épandage.

6. Epandeur centrifuge selon l'une ou plusieurs des revendications précédentes, caractérisé en ce que les repères ou les échelles (20, 40) pour le pivotement angulaire des palettes d'éjection (11, 42) se trouvent sur le disque d'épandage (10) au niveau de son bord extérieur (17) et en ce que le bord (21) de la palette d'éjection respective (11, 42) appliqué contre le disque d'épandage (10) coopère comme index (22) avec les repères ou l'échelle (20, 40).

7. Epandeur centrifuge selon l'une ou plusieurs des revendications précédentes, caractérisé par une échelle (34) prévue sur la face supérieure de l'une des deux parties (12, 43) coulissantes respectivement de la palette d'éjection (11, 42) et en ce que l'autre partie (13, 46) des deux parties (12, 13, 43, 46) de la palette d'éjection (11, 42) comporte un index (32) coopérant avec l'échelle (34, 43).

8. Epandeur centrifuge selon la revendication 1, caractérisé en ce que les parties (12, 13, 43, 46) la palette d'éjection (11, 42) ont une section en forme de U et/ou de goulotte et en ce que la partie (13, 43) de la palette d'éjection (11, 42) adjacente à la partie intérieure (12, 43) présente un contour intérieur adapté au contour extérieur de la partie intérieure (12, 43) de palette en forme de goulotte, cette partie extérieure étant derrière la partie intérieure (12, 43) dans le sens de rotation (23) des disques d'épandage (10).

9. Epandeur centrifuge selon la revendication 7, caractérisé en ce que la branche inférieure (26) de la partie intérieure (12, 43) comporte sur une partie de sa longueur une cavité pour créer un espace libre (24) dans lequel vient prendre la branche inférieure (25) de la partie coulissante (13, 46) à une certaine distance du disque d'épandage et en ce que le volume libre (24) correspond sensiblement à l'importance de la section de la branche inférieure (25) de la partie coulissante (13, 46) de la palette d'éjection (11, 42).

10. Epandeur centrifuge selon la revendication 9, caractérisé en ce que la branche inférieure (26) de la partie intérieure (12, 43) de la palette est recourbée pour créer l'espace libre (24).

11. Epandeur centrifuge selon la revendication 5, caractérisé en ce que le mécanisme de blocage (28) est prévu pour bloquer les parties (12, 13, 43, 46) coulissantes l'une par rapport à l'autre dans la direction longitudinale des palettes d'éjection (11, 42), entre les branches supérieures (29, 30) des parties coulissantes l'une par rapport à l'autre (12, 13, 43, 46).

12. Epandeur centrifuge selon la revendication 1, caractérisé en ce que les parties (12, 13, 43, 46) coulissantes l'une par rapport à l'autre des palettes d'éjection (11, 42) font suite au moins à une autre partie (35) qui peut pivoter dans un plan vertical, par rapport aux autres parties (12, 13, 43, 46) et peut se fixer dans au moins deux positions différentes.

13. Epandeur centrifuge selon la revendication 6 et 7, caractérisé en ce que les échelles (20, 34) sont caractérisées ou désignées de manière à pouvoir être distinguées.

14. Epandeur centrifuge selon la revendication 6 ou 7, caractérisé en ce que l'échelle respective (34) est placée dans une cavité (33).

15. Epandeur centrifuge selon la revendication 17, caractérisé en ce que la cavité (33) est réalisée dans la branche supérieure (30) en forme de goulotte, sur la palette d'éjection (11, 42).

16. Epandeur centrifuge selon la revendication 15, caractérisé en ce que le disque d'épandage (10) comporte une cavité matricée pour recevoir l'échelle (20).

17. Epandeur centrifuge selon la revendication 15, caractérisé en ce qu'une échelle (34) est collée ou fixée de toute autre manière dans la cavité (33).

18. Epandeur centrifuge selon la revendication 1, caractérisé en ce que la partie extérieure (13, 46) de la palette d'éjection (11, 42) est réalisée en un matériau résistant beaucoup plus à l'usure que la partie intérieure (12, 43) de la palette d'éjection (11, 42).

FIG. 1

FIG. 3

FIG. 2

EP 0 281 886 B1

FIG. 4

FIG. 5

FIG.7

FIG.6

FIG. 9

FIG. 8

FIG. 10

FIG. 11

FIG. 12